# EUROPÄISCHE PATENTSCHRIFT

(11) **EP 0 963 901 B1**
(45) Veröffentlichungstag und Bekanntmachung des Hinweises auf die Patenterteilung: **05.02.2003**
(21) Anmeldenummer: 99108996.2
(22) Anmeldetag: 06.05.1999
(51) Int. Cl.: B62D 21/02, B62D 21/09

(54) **Schlussquerträger für Sattelzugmaschinen**
Cross member for a semi-trailer tractor
Traverse pour tracteur de semi-remorque

(30) Priorität: 12.06.1998 DE 19826119
(43) Veröffentlichungstag der Anmeldung: 15.12.1999
(73) Patentinhaber: MAN Nutzfahrzeuge Aktiengesellschaft, 80976 München (DE)
(72) Erfinder: Regner, Alois, 80638 München (DE); Leuze, Michael, Dipl.-Ing(FH), 72770 Reutlingen (DE); Neukam, Michael, Dipl.-Ing.(TU), 82110 Germering (DE)

(56) Entgegenhaltungen:
- WO-A-95/10442
- PATENT ABSTRACTS OF JAPAN vol. 1998, no. 02, 30. Januar 1998 (1998-01-30) -& JP 09 263263 A (NISSAN DIESEL MOTOR CO LTD), 7. Oktober 1997 (1997-10-07)

## Beschreibung

Die Erfindung betrifft einen Rahmen für Sattelzugmaschinen gemäß dem Oberbegriff des Anspruches 1. Ein solcher Rahmen ist aus der WO 95/10442 A bekannt.

Es sind Rahmen für Sattelzugmaschinen bekannt, bei denen ein Obergurt bereichsweise ausgenommen und in diesen Bereich ein aus drei bzw. fünf Teilen bestehender Schlussquerträger eingesetzt ist. Darüber hinaus ist an dem Rahmen zusätzlich ein Kanten- oder Auffahrschutz zu montieren.

Aus der WO 95/10442 A ist ein aus mehreren Teilen zusammengesetzter Schlussquerträger für einen endseitigen Bereich eines Fahrzeugrahmens einer Sattelzugmaschine bekannt. Der endseitig mit winkligen Befestigungsplatten versehene Schlussquerträger verbindet dabei zwei Rahmenlängsträger des Fahrzeugrahmens, welche im oberseitigen Bereich ihrer Enden ein abfallendes Niveau aufweisen. Dieses abfallende Niveau ist durch gezielte Ausschneidungen und anschließender Zusammendrückung der Vertikalstege der Rahmenlängsträger erzielt.

Des weiteren ist ein Rahmen einer Sattelzugmaschine bekannt, bei der ein Rahmenobergurt von Längsträgem dergestalt eingezogen ist, daß er zusätzlich als Auffahrschutz für einen Sattelauflieger dienen kann. Dabei kann ein aus drei oder fünf Bauteilen bestehender Schlussquerträger lediglich von der Vorderseite des Rahmens der Sattelzugmaschine eingeschoben werden, wodurch ein nachträglicher Ausbau des Schlussquerträgers nur unter äußerst unwirtschaftlichen Bedingungen durchführbar ist.

Es ist weiterhin ein Schlussquerträger für einen Rahmen einer Sattelzugmaschine bekannt, der zwar einteilig ausgeführt ist, jedoch noch einen zusätzlich zu montierenden Kantenschutz benötigt.

Es ist daher Aufgabe der Erfindung, für den Rahmen von Sattelzugmaschinen einen deren Längsträger miteinander verbindenden, einteiligen Schlussquerträger zu schaffen , der einerseits kosten- und gewichtsreduziert und andererseits problemlos auswechselbar darstellbar ist.

Diese Aufgabe wird erfindungsgemäß durch die Merkmale des Anspruches 1 gelöst.

Durch die erfindungsgemäße Lösung sind beide Längsträger eines Rahmens einer Sattelzugmaschine endseitig durch einen auswechselbaren, keine weiteren Anbauteile benötigenden, einteiligen und jederzeit problemlos ausbaubaren Schlußquerträger miteinander verbunden. Dabei ist der einteilige Schlußquerträger im wesentlichen durch ein in etwa U-förmig geformtes Profil gebildet, das aus einem quer zur Fahrtrichtung angeordneten, vertikalen Mittelsteg und hiervon abragenden, im wesentlichen etwa horizontal in Fahrtrichtung weisenden oberen und unteren Flanschleisten besteht und über rechtwinklig von diesen abragende Vertikalfahnen innenseitig an Vertikalstegen der Längsträger anliegend befestigt ist. Dabei liegt die obere Flanschleiste des Schlußquerträgers wenigstens im Bereich ihres freien Endes niveaumäßig etwa in Höhe oberer Horizontalflansche der Längsträger. Somit kann die obere Flanschleiste des Schlußquerträgers mit ihrer Oberseite bedarfsweise eine Auffahrrampe für einen Sattelzug bilden. Durch seine erfindungsgemäße Formgebung kann der Schlußquerträger zusätzlich die Funktion eines Kanten- oder Auffahrschutzes übernehmen. Der derart ausgestaltete Schlußquerträger stellt folglich gegenüber herkömmlichen Schlußquerträgern von Sattelzugmaschinen eine vorteilhafte Teile-, Kosten- und Gewichtsreduzierung dar und ist ohne Ausbau weiterer Bauteile problemlos auswechselbar.

Gemäß einer weiteren Ausgestaltung der Erfindung kann die obere Flanschleiste des Schlußquerträgers ein in Fahrtrichtung schräg ansteigendes Niveau aufweisen. Die Vertikalfahnen der oberen und unteren Flanschleiste können zueinanderweisend angeordnet sein. Alternativ hierzu können die oberen und unteren Flanschleisten in voneinanderweisender oder in gleichweisender Richtung angeordnet sein.

Gemäß einer weiteren Ausgestaltung der Erfindung kann der vertikale Mittelsteg des Schlußquerträgers zusätzlich über rechtwinklig von diesem abragende, in Fahrtrichtung weisende Vertikalfahnen innenseitig der Vertikalstege der Längsträger anliegend befestigt sein.

Gemäß einer weiteren Ausgestaltung der Erfindung können Längsträger im endseitigen Bereich zueinanderweisender, oberer Horizontalflansche jeweils eine Aussparung aufweisen. Diese kann von der oberen Flanschleiste des Schlußquerträgers wenigstens bereichsweise überdeckt sein.

Gemäß einer weiteren Ausgestaltung der Erfindung können die Vertikalstege der Längsträger im Bereich ihrer Aussparungen in Fahrtrichtung gesehen niveaumäßig ansteigende, etwa einem Verlauf der geneigt ausgeführten, oberen Flanschleiste folgende Schrägen aufweisen. Diese können eine durchgehende, gestufte, gewölbte oder sonstwie gestaltete Kurve aufweisen. Die obere Flanschleiste des Schlußquerträgers kann in vorteilhafter Weise die Funktion eines Kantenschutzes für die durch die Aussparungen gebildeten Schrägen übernehmen.

Gemäß einer weiteren Ausgestaltung der Erfindung können die innenseitig der Längsträger anliegenden Vertikalfahnen des Schlußquerträgers Bohrungen eines Lochbildes aufweisen, das auf ein Lochbild von innerhalb der Vertikalstege der Längsträger angeordneter Bohrungen abgestimmt ist. Dabei können die Bohrungen zur Aufnahme von den Schlußquerträger an den beiden Längsträgern befestigenden Befestigungsmittel vorgesehen sein. Als Befestigungsmittel können bekannte Schraub- oder Nietverbindungen verwendet sein.

Gemäß einer weiteren Ausgestaltung der Erfindung kann die obere und/oder die untere Flanschleiste des Schlußquerträgers jeweils eine einwärts des Rahmens gerichtete und quer zur Fahrtrichtung verlaufende Ausnehmung aufweisen.

Gemäß einer weiteren Ausgestaltung der Erfindung kann die untere Flanschleiste des Schlußquerträgers von unteren Horizontalflanschen der Längsträger untergriffen sein.

Gemäß einer weiteren Ausgestaltung der Erfindung kann die obere Flanschleiste des Schlußquerträgers entweder eine verschleißfeste Beschichtung aufweisen oder mit einer zusätzlichen, verschleißfesten Platte versehen sein.

Nachfolgend ist die erfindungsgemäße Lösung an Hand eines in der Zeichnung dargestellten Ausführungsbeispieles näher erläutert.

Es zeigen:
- Fig. 1: ausschnittsweise einen hinteren Bereich eines Rahmens einer Sattelzugmaschine in perspektivischer Ansicht,
- Fig. 2: ausschnittsweise eine vergrößerte Darstellung eines hinteren Bereiches eines Rahmens gemäß Fig. 1,
- Fig. 3: einen einteiligen Schlußquerträger in perspektivischer Darstellung,
- Fig. 4: in Seitenansicht einen Schlußquerträger gemäß Fig. 3 und
- Fig. 5: in Hinteransicht einen Rahmen einer Sattelzugmaschine gemäß Fig. 1.

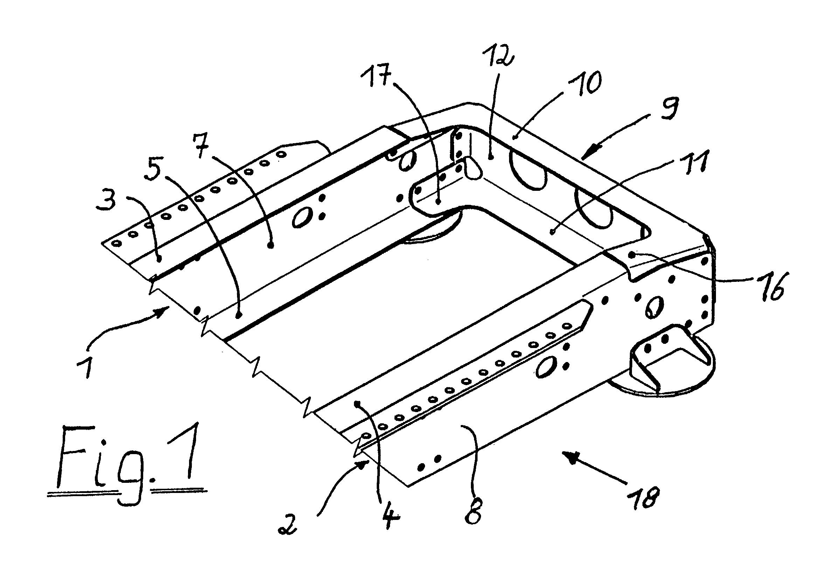

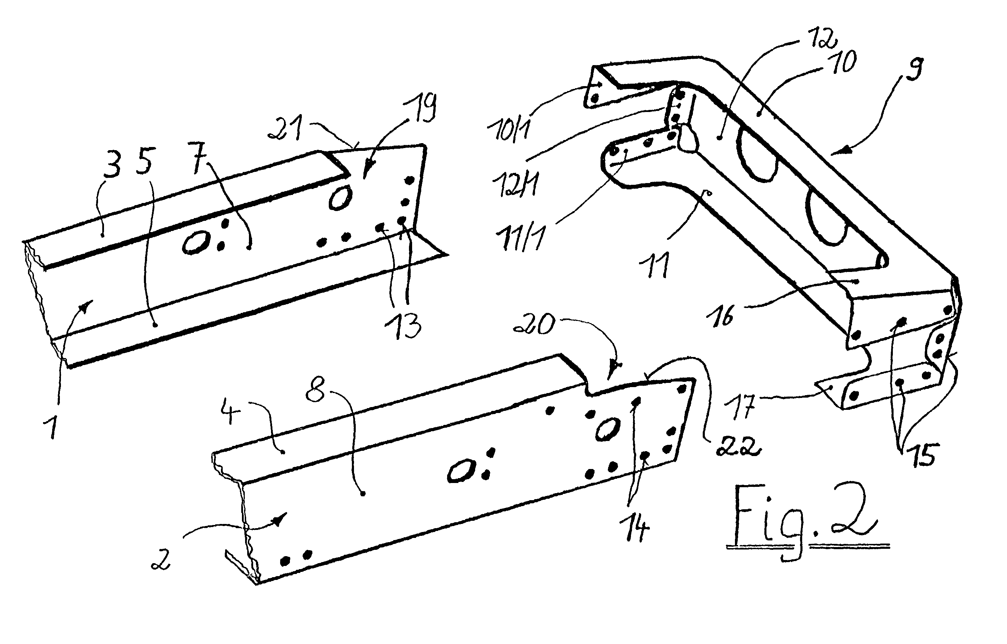

In Fig. 1 ist in perspektivischer Ansicht ausschnittsweise ein hinterer Bereich eines Rahmens 18 einer Sattelzugmaschine dargestellt. Der Rahmen 18 weist hierbei als wesentliche Bauteile zwei parallel zueinander beabstandete und zueinanderweisende U-förmige Längsträger 1, 2 auf, die in einem endseitigen Bereich des Rahmens 18 mittels eines einteiligen Schlußquerträgers 9 miteinander verbunden sind. Der einteilige Schlußquerträger 9 ist im wesentlichen etwa U-förmig ausgebildet und zwischen Vertikalstegen 7, 8 der Längsträger 1, 2 aufgenommen und an diesen anliegend befestigt. Die Befestigung des Schlußquerträgers 9 an den Vertikalstegen 7, 8 ist mittels hier nicht gezeigter Befestigungsmittel realisiert. Eine oberseitig von einem vertikalen Mittelsteg 12 des Schlußquerträgers 9 abragende, obere Flanschleiste 10 von in Fahrtrichtung gesehen schräg ansteigendem Niveau deckt mit in Fahrtrichtung weisenden freien Enden 16 jeweils komplementär hierzu ausgebildete Aussparungen 19, 20 (Fig. 2) im Bereich oberer Horizontalflansche 3, 4 der Längsträger 1, 2 etwa bündig ab. In dem hier gezeigten Beispiel sind die Längsträger 1, 2 des Rahmens 18 U-förmig ausgebildet und mit ihren oberen Horizontalflanschen 3, 4 und unteren Horizontalflanschen 5, 6 einander zugewandt angeordnet.

Nach einer anderen, hier nicht gezeigten Variante können die oberen und unteren Horizontalflansche 3, 4, 5, 6 der beiden Längsträger 1, 2 auch voneinander abgewandt angeordnet sein. Anstelle von U-förmigen Profilen können die Längsträger 1, 2 auch andere Profilarten, beispielsweise Z-Profile, T-Profile oder Doppel-T-Profile, aufweisen. Bei voneinander abgewandt angeordneten oberen Horizontalflanschen 3, 4 der Längsträger 1, 2 können die durch die obere Flanschleiste 10 des Schlußquerträgers 9 abzudeckenden Aussparungen 19, 20 ersatzlos entfallen.

In Fig. 2 sind ausschnittsweise und in schematisierter Vereinfachung die beiden zueinander beabstandeten Längsträger 1, 2 sowie der diese in ihrem endseitigen Bereich miteinander verbindende Schlußquerträger 9 perspektivisch dargestellt. Die geneigt ausgeführte, obere Flanschleiste 10 des Schlußquerträgers 9 ist mit von längs ihrer freien Enden 16 rechtwinklig abragender, fallend angeordneter Vertikalfahnen 10/1 jeweils innenseitig an den Vertikalstegen 7, 8 der Längsträger 1, 2 anliegend befestigbar. Die Befestigung der Vertikalfahnen 10/1 an den Vertikalstegen 7, 8 ist über hier nicht dargestellte Befestigungsmittel realisiert. Die obere Flanschleiste 10 des Schlußquerträgers 9 deckt mit ihren freien, in Fahrtrichtung weisenden Enden 16 die jeweils etwa komplementär hierzu ausgebildeten Aussparungen 19, 20 der oberen Horizontalflansche 3, 4 der Längsträger 1, 2 etwa bündig ab. Somit übernimmt die obere Flanschleiste 10 des Schlußquerträgers 9 die Funktion eines Kanten- und Auffahrschutzes.

Des weiteren weist der vertikale Mittelsteg 12 des Schlußquerträgers 9 rechtwinklig von diesem abragende, in Fahrtrichtung weisende Vertikalfahnen 12/1 auf, die innenseitig der Vertikalstege 7, 8 der Längsträger 1, 2 anliegend über entsprechende Befestigungsmittel befestigbar sind. Eine horizontal ausgeführte untere Flanschleiste 11 des Schlußquerträgers weist an ihren freien, in Fahrtrichtung weisenden Enden 17 jeweils eine rechtwinklig von diesen abragende, stehend angeordnete Vertikalfahne 11/1 auf. Diese ist an den Vertikalstegen 7, 8 der Längsträger 1, 2 anliegend über Befestigungsmittel befestigbar. Im Falle des Vorsehens U-förmig ausgeführter Längsträger 1, 2 mit zueinander weisend angeordneter oberer und unterer Horizontalflansche 3, 4, 5, 6 ist die untere Flanschleiste 11 des Schlußquerträgers 9 bereichsweise von den unteren Horizontalflanschen 5, 6 der Längsträger 1, 2 untergriffen. In Abhängigkeit von den Bauhöhen von Mittelsteg 12 und den Vertikalstegen 7, 8 sowie den Anbringungsorten der hier nicht näher beschriebenen Befestigungsmittel kann die untere Flanschleiste 11 des Schlußquerträgers 9 auf den unteren Horizontalflanschen 5, 6 der Längsträger 1, 2 aufliegen oder zu diesen beabstandet sein. Die Vertikalstege 7, 8 der Längsträger 1, 2 sind im Bereich ihrer Aussparungen 19, 20 mit in Fahrtrichtung gesehen niveaumäßig ansteigend ausgeführten Schrägen 21, 22 versehen, die etwa einen Verlauf aufweisen, der einem Verlauf der geneigt ausgeführten, oberen Flanschleiste 10 des Schlußquerträgers 9 etwa entspricht. Die innenseitig der Längsträger 1, 2 anliegenden Vertikalfahnen 10/1, 11/1, 12/1 weisen allesamt Bohrungen 15 eines solcherart gestalteten Lochbildes auf, das auf ein Lochbild von innerhalb der Vertikalstege 7, 8 der Längsträger 1, 2 angeordneter Bohrungen 13, 14 abgestimmt ist. Die Bohrungen 13, 14, 15 der Längsträger 1, 2 bzw. des Schlußquerträgers 9 sind zur Aufnahme von den Schlußquerträger 9 an den beiden Längsträgern 1, 2 befestigenden Befestigungsmittel vorgesehen. Als Befestigungsmittel können Schraubverbindungen oder Nietverbindungen verwendet sein.

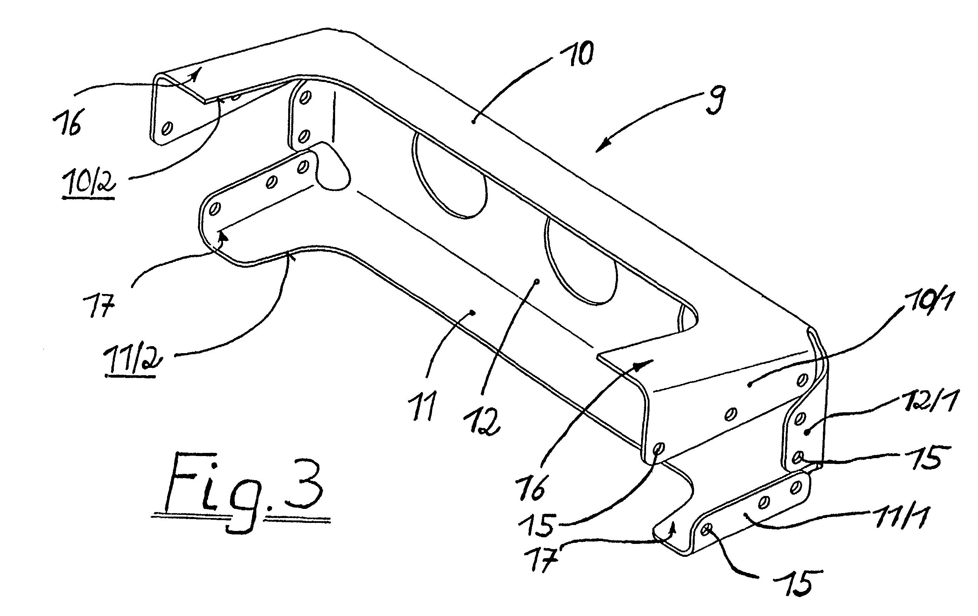

In Fig. 3 ist der in Fig. 2 beschriebene Schlußquerträger 9 in perspektivischer Vergrößerung dargestellt. In der hier gezeigten Version weist sowohl die obere Flanschleiste 10 als auch die untere Flanschleiste 11 des Schlußquerträgers 9 jeweils eine einwärts des Rahmens gerichtete und quer zur Fahrtrichtung verlaufende Ausnehmung 10/2, 11/2 auf, die in dem hier gezeigten Ausführungsbeispiel etwa eine rechtwinklige Fläche aufweist. Somit ist die obere und die untere Flanschleiste 10, 11 jeweils in horizontaler Ebene etwa U-förmig ausgebildet und jeweils mit in Fahrtrichtung weisenden Enden 16, 17 versehen.

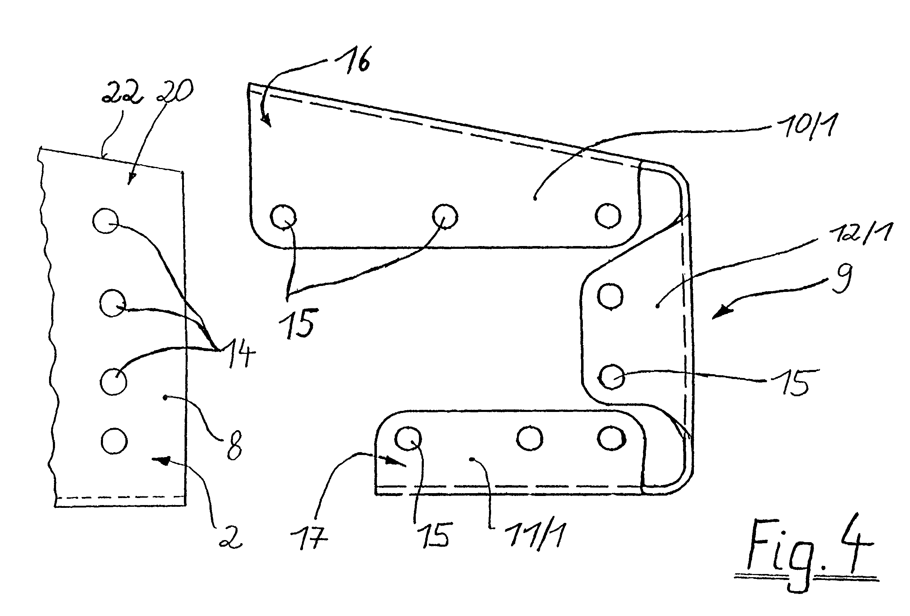

In Fig. 4 ist der in Fig. 2 beschriebene Schlußquerträger 9 in Seitenansicht vergrößert dargestellt. Der hier nur ausschnittsweise dargestellte, den Schlußquerträger 9 aufnehmende Längsträger 2 weist oberseitig seines Vertikalsteges 8 die durch die Aussparung 20 gebildete Schräge 22 auf. Diese kann durchgehend, gestuft oder sonstwie geformt ausgeführt sein.

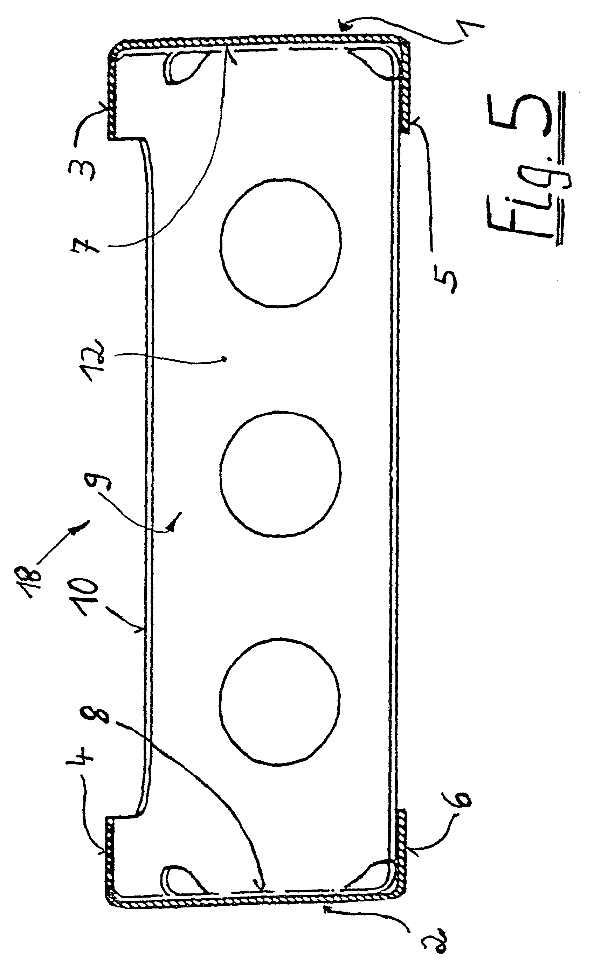

In Fig 5. ist der in Fig. 1 ausschnittsweise gezeigte Rahmen 18 einer Sattelzugmaschine vergrößert und in einer Hinteransicht dargestellt. In der hier gezeigten Version ist der zwischen den Vertikalstegen 7, 8 der U-förmigen Längsträger 1, 2 aufgenommene Schlußquerträger 9 von den unteren Horizontalflanschen 5, 6 der Längsträger 12 untergriffen. Die obere Flanschleiste 10 des Schlußquerträgers 9 kann mit einer besonders verschleißfest ausgebildeten Platte abgedeckt sein. Es ist alternativ hierzu möglich, die obere Flanschleiste 10 des Schlußquerträgers 9 mit einer verschleißfesten Beschichtung zu versehen.

## Patentansprüche

1. Rahmen für Sattelzugmaschinen mit zwei Längstrager, mit einem beide Längsträger (1, 2) endseitig miteinander verbindenden Schlussquerträger, der als Teil des hinteren Bereiches des Rahmens im wesentlichen durch ein in etwa U-förmig geformtes Profil mit einem quer zur Fahrtrichtung angeordneten, vertikalen Mittelsteg und hiervon abragenden, im wesentlichen etwa horizontal in Fahrtrichtung weisenden oberen und unteren Flanschleisten gebildet ist, **dadurch gekennzeichnet, dass** der Schlussquerträger (9) einteilig ausgebildet ist und über rechtwinklig von oberen und unteren Flanschleisten (10, 11) abragenden Vertikalfahnen (10/1, 11/1) innenseitig an Vertikalstegen (7, 8) der Längsträger (1, 2) anliegend befestigt ist, wobei die obere Flanschleiste (10) des Schlussquerträgers (9) wenigstens im Bereich ihres freien Endes (16) niveaumäßig etwa in Höhe oberer Horizontalflansche (3, 4) der Längsträger (1, 2) liegt.

2. Rahmen nach Anspruch 1, **dadurch gekennzeichnet, dass** die obere Flanschleiste (10) des Schlussquerträgers (9) ein in Fahrtrichtung schräg ansteigendes Niveau aufweist, und daß die Vertikalfahnen (10/1, 11/1) der oberen und unteren Flanschleiste (10, 11) zueinanderweisend angeordnet sind.

3. Rahmen nach einem der Ansprüche 1 und 2, **dadurch gekennzeichnet, dass** der vertikale Mittelsteg (12) des Schlussquerträgers (9) zusätzlich über rechtwinklig von diesem abragende, in Fahrtrichtung weisende Vertikalfahnen (12/1) innenseitig der Vertikalstege (7, 8) der Längsträger (1, 2) anliegend befestigt ist.

4. Rahmen nach einem oder mehreren der vorangegangenen Ansprüche 1 bis 3, **dadurch gekennzeichnet, dass** Längsträger (1, 2) im endseitigen Bereich zueinanderweisender, oberer Horizontalflansche (3, 4) jeweils eine Aussparung (19, 20) aufweisen, die von der oberen Flanschleiste (10) des Schlussquerträgers (9) wenigstens bereichsweise überdeckt ist.

5. Rahmen nach Anspruch 4, **dadurch gekennzeichnet, daß** die Vertikalstege (7, 8) der Längsträger (1, 2) im Bereich ihrer Aussparungen (19, 20) in Fahrtrichtung gesehen, niveaumäßig ansteigende, etwa einem Verlauf der geneigt ausgeführten, oberen Flanschleiste (10) folgende Schrägen (21, 22) aufweisen.

6. Rahmen nach einem oder mehreren der vorangegangenen Ansprüche 1 bis 5, **dadurch gekennzeichnet, daß** die innenseitig der Längsträger (1, 2) anliegenden Vertikalfahnen (10/1, 11/1, 12/1) des Schlußquerträgers (9) Bohrungen (15) eines Lochbildes aufweisen, das auf ein Lochbild von innerhalb der Vertikalstege (7, 8) der Längsträger (1, 2) angeordneter Bohrungen (13, 14) abgestimmt ist, wobei die Bohrungen (13, 14, 15) zur Aufnahme von den Schlußquerträger (9) an den beiden Längsträgern (1, 2) befestigenden Befestigungsmittel vorgesehen sind.

7. Rahmen nach einem oder mehreren der vorangegangenen Ansprüche 1 bis 6, **dadurch gekennzeichnet, daß** die obere und/oder die untere Flanschleiste (10, 11) des Schlußquerträgers (9) jeweils eine einwärts des Rahmens (18) gerichtete und quer zur Fahrtrichtung verlaufende Ausnehmung (10/2, 11/2) aufweist.

8. Rahmen nach einem oder mehreren der vorangegangenen Ansprüche 1 bis 7, **dadurch gekennzeichnet, daß** die untere Flanschleiste (11) des Schlußquerträgers (9) von unteren Horizontalflanschen (5, 6) der Längsträger (1, 2) untergriffen ist.

9. Rahmen nach einem oder mehreren der vorangegangenen Ansprüche 1 bis 8, **dadurch gekennzeichnet, daß** die obere Flanschleiste (10) des Schlußquerträgers (9) entweder eine verschleißfeste Beschichtung aufweist oder mit einer zusätzlichen verschleißfesten Platte versehen ist.

## Claims

1. A frame for articulated road trains consisting of two side members with an end cross-member butting onto and interlinking the two side members (1, 2) and, being a part of the rear section of the frame, mainly comprising a roughly U-shaped section with a vertical central web arranged at right angles to the direction of motion and with upper and lower flanged rails protruding therefrom, mainly pointing roughly horizontally in the direction of motion, **characterized in that** said end cross-member (9) is designed as a one-piece member, being tightly fastened to the inside of the vertical webs (7, 8) belonging to the side members (1, 2) by vertical lugs (10/1, 11/1) protruding at right angles from the upper and lower flanged rails (10, 11), the upper flanged rail (10) of the end cross-member (9) lying, at least in the region of its free end (16), roughly level with the upper horizontal flanges (3, 4) of the side members (1, 2).

2. A frame according to claim 1 **characterized in that** the upper flanged rail (10) of the end cross-member (9) has a surface slanting upwards in the direction of motion and **in that** the vertical lugs (10/1, 11/1) belonging to the upper and lower flanged rails (10, 11) are arranged so as to point towards each other.

3. A frame according to claim 1 or 2 **characterized in that** the vertical central web (12) of the end cross-member (9) is additionally tightly fastened to the insides of the vertical webs (7, 8) belonging to the side members (1, 2) via vertical lugs (12/1) protruding at right angles to said cross-member (9) and pointing in the direction of motion.

4. A frame according to one or more of the preceding claims 1 to 3 **characterized in that** the side members (1, 2) each have recesses (19, 20) in the end regions of the upper horizontal flanges (3, 4) that point towards each other, these recesses being covered at least in part by the upper flanged rail (10) belonging to the end cross-member (9).

5. A frame according to claim 4 **characterized in that**, in the area of their recesses (19, 20), looking in the direction of motion, the vertical webs (7, 8) belonging to the side members (1, 2) have slanted surfaces (21, 22) ascending in level, roughly following the gradient of the inclined upper flanged rail (10).

6. A frame according to one or more of the preceding claims 1 to 5 **characterized in that** the vertical lugs (10/1, 11/1, 12/1) belonging to the end cross-member (9) and closely attached to the insides of the side members (1, 2) have holes (15) drilled in them based on a master gauge that matches the master gauge for the drill holes (13, 14) arranged within the vertical webs (7, 8) belonging to the side members (1, 2), the drill holes (13, 14, 15) being intended to accommodate the means of fastening the end cross-member (9) to the two side members (1, 2).

7. A frame according to one or more of the preceding claims 1 to 6 **characterized in that** each of the upper and/or lower flanged rails (10, 11) belonging to the end cross-member (9) has a recess (10/2, 11/2) pointing inwards from the frame (18) and running at right angles to the direction of motion.

8. A frame according to one or more of the preceding claims 1 to 7 **characterized in that** the lower flanged rail (11) belonging to the end cross-member (9) is enclosed from below by the lower horizontal flanges (5, 6) of the side members (1, 2).

9. A frame according to one or more of the preceding claims 1 to 8 **characterized in that** upper flanged rail (10) belonging to the end cross-member (9) either has a wear-resistant coating or is fitted with an additional wear-resistant plate.

## Revendications

1. Cadre de châssis pour tracteur de semi-remorque à deux longerons (1, 2) et une traverse terminale (9) reliant les deux longerons (1, 2) à leur extrémité et essentiellement constituée, en tant que partie de la zone arrière du cadre, d'un profilé en forme approximative de U composé d'une âme verticale (12) perpendiculaire au sens de la marche et d'ailes supérieure et inférieure (10, 11) rapportées en saillie, approximativement à l'horizontale, dans le sens de la marche, **caractérisé en ce que** la traverse terminale (9) est de configuration monobloc et fixée en adhérence à l'intérieur des âmes verticales (7, 8) des longerons (1, 2) par l'intermédiaire de pattes verticales (10/1, 11/1) perpendiculaires aux ailes supérieure et inférieure (10, 11), l'aile supérieure (10) de la traverse terminale (9) étant approximativement à hauteur des ailes horizontales (3, 4) des longerons (1, 2), tout au moins au niveau de son extrémité libre (16).

2. Cadre de châssis suivant la revendication 1, **caractérisé en ce que** l'aile supérieure (10) de la traverse terminale (9) présente une obliquité ascendante dans le sens de la marche et que les pattes verticales (10/1, 11/1) des ailes supérieure et inférieure (10, 11) sont en regard.

3. Cadre de châssis suivant l'une des revendications 1 et 2, **caractérisé en ce que** l'âme verticale (12) de la traverse terminale (9) est en outré fixée en adhérence à l'intérieur des âmes verticales (7, 8) des longerons (1, 2) par l'intermédiaire de pattes verticales (12/1) orientées dans le sens de la marche, perpendiculairement à l'âme verticale (12).

4. Cadre de châssis suivant l'une ou plusieurs des revendications précédentes 1 à 3, **caractérisé en ce que** les longerons (1, 2) présentent au niveau des extrémités en regard des ailes horizontales supérieures (3, 4) un évidement (19, 20) recouvert au moins en partie par l'aile supérieure (10) de la traverse terminale (9).

5. Cadre de châssis suivant la revendication 4, **caractérisé en ce que** les âmes verticales (7, 8) des longerons (1, 2) présentent au niveau de leur entaille (19, 20) une obliquité (21, 22) ascendante dans le sens dé la marche, suivant approximativement celle de l'aile supérieure (10) de la traverse terminale (9).

6. Cadre de châssis suivant l'une ou plusieurs des revendications précédentes 1 à 5, **caractérisé en ce que** les pattes verticales (10/1, 11/1, 12/1) de la traverse terminale (9) en adhérence à l'intérieur des longerons (1, 2) présentent des trous (15) dont le schéma de perçage correspond à celui de trous (13, 14) pratiqués dans l'âme verticale (7, 8) des longerons (1,2), les trous (13, 14, 15) étant destinés à recevoir des moyens de fixation de la traverse terminale (9) aux deux longerons (1, 2).

7. Cadre de châssis suivant l'une ou plusieurs des revendications précédentes 1 à 6, **caractérisé en ce que** l'aile supérieure (10) et/ou l'aile inférieure (11) de la traverse terminale (9) présente(nt) un évidement (10/2, 11/2) orienté vers l'intérieur du cadre et perpendiculaire au sens de la marche.

8. Cadre de châssis suivant l'une ou plusieurs des revendications précédentes 1 à 7, **caractérisé en ce que** l'aile inférieure (11) de la traverse terminale (9) talonne l'aile horizontale inférieure (5, 6) des longerons (1, 2).

9. Cadre de châssis suivant l'une ou plusieurs des revendications précédentes 1 à 8, **caractérisé en ce que** l'aile supérieure (10) de la traverse terminale (9) soit présente un revêtement anti-usure, soit est dotée d'une plaque anti-usure supplémentaire.
